# EUROPEAN PATENT APPLICATION

(11) **EP 1 801 386 A1**
(43) Date of publication of application: **27.06.2007**
(21) Application number: 05112452.7
(22) Date of filing: 20.12.2005
(51) Int. Cl.: F02B 67/04, F02B 67/10, B60K 6/04, F02B 39/04

(54) **An arrangement at an internal combustion engine**

(71) Applicant: Ford Global Technologies, LLC, Dearborn, MI 48126 (US)
(72) Inventor: Sällström, Göran, 374 94 Trensum (SE)
(74) Representative: Holmberg, Magnus

(57) **Abstract**

The invention relates to an arrangement at an internal combustion engine, comprising an auxiliary unit (1) and a transmission, the auxiliary unit (1) being adapted to be driven by a crankshaft (2) of the engine via the transmission, characterized in that it comprises a first electrical machine (5), in that the transmission comprises a planetary gear set (4), comprising three gear parts (41, 42, 43) in the form of a sun wheel (41), an annulus wheel (42), and a planet carrier (43), and in that the three gear parts (41, 42, 43) are connected respectively to the auxiliary unit (1), the first electrical machine (5) and the crankshaft (2).

## Description

### TECHNICAL FIELD

The present invention relates to an arrangement at an internal combustion engine, comprising an auxiliary unit and a transmission, the auxiliary unit being adapted to be driven by a crankshaft of the engine via the transmission.

### BACKGROUND

Auxiliary units of an internal combustion engine are usually driven by the engine crankshaft via some sort of transmission. The engine could be mounted in a vehicle, where the engine speed is dependent on the operational situation of the vehicle. A problem is that the speed of the auxiliary unit, as dependent on the transmission ratio and the engine speed, may not be suited to the requirements of the auxiliary unit. As an example, where the auxiliary unit is a compressor for an air conditioning system of a vehicle, the requirements of the A/C system, and therefore the A/C compressor speed is substantially independent of the requirements of the engine speed.

### SUMMARY OF THE INVENTION

The object of the invention is to decrease the dependency of an auxiliary unit, adapted to be driven by an internal combustion engine, upon the engine.

This object is reached with an arrangement of the type mentioned initially, comprising an first electrical machine, the transmission comprising a planetary gear set, comprising three gear parts in the form of a sun wheel, an annulus wheel, and a planet carrier, in addition to which the three gear parts are connected respectively to the auxiliary unit, the first electrical machine and the crankshaft.

Thereby, the first electrical machine can be used to continuously change the effective gear ratio of the planetary gear, so that the speed requirements of the auxiliary unit can be met with a low dependency on the engine speed.

The invention makes it possible to run an auxiliary unit at a speed that is adapted to the operational requirements of the unit. These requirements can differ very much from the requirements of the requirements on the engine. For example, in a vehicle it can be desired to run an A/C compressor at a constant speed, while the engine is required, due to intensive driver requests and demanding road conditions, to change speed within a very large range and within short time spans. The invention can allow for an auxiliary device to run at constant speed while the engine speed is changing within a large interval. This will allow for auxiliary units and auxiliary systems to be designed without taking engine speed fluctuations into account, or reducing consideration for such fluctuations. In turn, this will improve the performance and/or reduce complexity of auxiliary systems. In other words, the independent operation of the auxiliary unit, provided by the invention, is very advantageous in cases where the auxiliary unit itself drives a device or a system which has operational parameters with requirements that are independent of the engine speed.

In one embodiment, the auxiliary unit is a compressor for an air conditioning system. An air conditioning system, having requirements that are essentially independent of the engine requirements, can thereby maintain an operation with limitations of engine operation dependency largely reduced.

In another embodiment, the auxiliary unit is a supercharger in a homogenous charge compression ignition (HCCI) engine. In a HCCI engine the arrangement according to the invention has very large advantages. As is known in the art, in a conventional HCCI engine, when the load increases, the ignition mode has to be changed from homogenous charge compression ignition to, depending on the engine type, spark ignition or traditional compression ignition. However, due to the favourable fuel consumption characteristics of the HCCI mode, it is advantageous to maintain this mode also at higher loads. With the arrangement according to this embodiment of the invention, it is possible to provide a high speed of the supercharger, even if the engine speed is relatively low. This means that the pressure (total mass) of the air/fuel mixture and dilution ratio with EGR (Exhaust Gas Recirculation) can be increased to maintain the HCCI mode when the engine load increases. Also, this will decrease the number of ignition mode switches in a HCCI engine.

Further advantageous embodiments are defined in the dependent claims 4-14, and described in greater detail below.

### BRIEF DESCRIPTION OF DRAWINGS

The invention is described in greater detail below with reference to the accompanying drawings, wherein:
- fig. 1 shows a schematic view of an arrangement according to one embodiment of the invention,
- fig. 2 is a diagram showing, as a function of engine speed, the electric power consumption of an electrical machine shown in fig. 1 and the gear ratio between an auxiliary unit shown in fig. 1 and a crankshaft of the internal combustion engine, and
- fig. 3-12 show schematic views of arrangements according to alternative embodiments of the invention.

### DETAILED DESCRIPTION

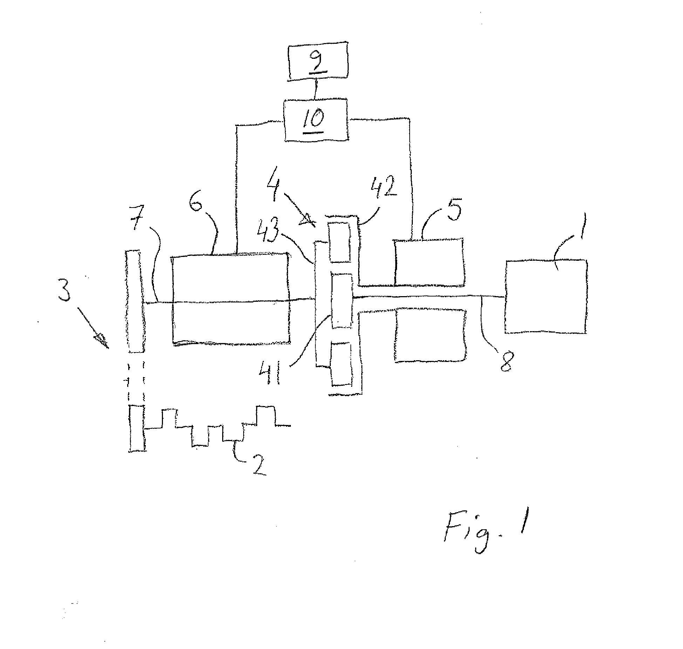

Fig. 1 shows a schematic view of an arrangement at an internal combustion engine with a crankshaft 2, comprising an auxiliary unit 1, a transmission 3, 4, a first electrical machine 5 and a second electrical machine 6. In this example, the auxiliary unit 1 is a compressor for an air conditioning system of a vehicle comprising the internal combustion engine. However, the auxiliary unit 1 could also be a coolant pump, hydraulic pump (for power steering, active suspension, etc.), vacuum pump (for brakes etc), fuel pump (for fuel feed or high pressure injection), oil pumps (for transmission and engine lubrication), or any other auxiliary apparatus. As described closer below, in a particularly advantageous embodiment, the auxiliary unit is a supercharger in a homogenous charge compression ignition (HCCI) engine.

The transmission comprises a first transmission part 3, (in fig. 1 partially indicated with broken lines), connecting the crankshaft 2 with a first shaft 7. The first transmission part 3 can be of any suitable form, e.g. comprising a belt or solely gear wheels. The transmission also comprises a second transmission part 4 in the form of a planetary gear set 4, which in turn comprises three gear parts 41, 42, 43 in the form of a sun wheel 41, an annulus wheel 42, and a planet carrier 43, the latter carrying a number of planet wheels in a manner known in the art. The planetary gear set 4 is connected to the auxiliary unit 1 via a second shaft 8.

The rotor of the second electrical machine 6, and the first shaft 7 are fixedly connected to the planet carrier 43. The rotor of the first electrical machine 5 is fixedly connected the annulus wheel 42, and the auxiliary unit is fixedly connected to the sun wheel 41.

The stators of the first and second electrical machines 5, 6 are electrically connected to a power storage device 9, e.g. at least one battery, via an electric control unit 10, which controls the flow of electric power to and from the electrical machines 5, 6 and the power storage device 9. The second electrical machine 6 is preferably an ISG (Integrated Starter Generator), which can selectively be used as a starter, to provide power to the power storage device 9, or to add torque to engine output when the engine is running.

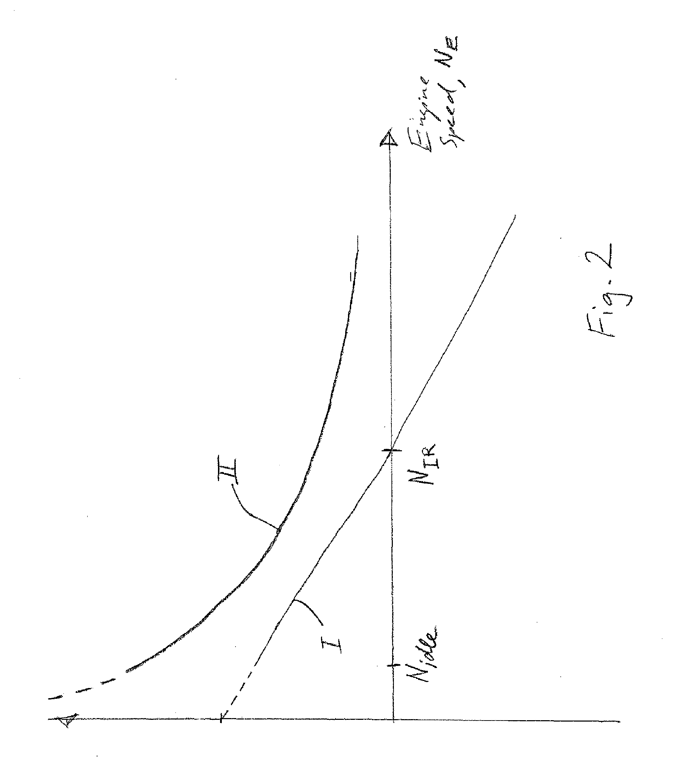

Below, reference is made also to fig. 2. Although in practice a plurality of power consuming units and systems could be connected to the power storage device 9 and the second electrical machine 6, for simplification of the examples below, it is assumed that only the auxiliary unit is to be provided with power. Also, for understanding of the function of the arrangement in fig. 1, it can be assumed that the operational situation of the auxiliary unit is such that it is desired to run at constant speed, independently of the engine speed. Nevertheless, in general, the invention provides a greater independence of the auxiliary unit speed from the engine speed.

Fig. 2 is a diagram showing, as a function of engine speed, the electric power consumption of the first electrical machine 5 (curve I). Fig. 2 also shows the gear ratio *N_{AUX}*/*N_{E}* (curve II) between the auxiliary unit 1 and the crankshaft 2, as a function of engine speed. More specifically, curve II shows the ratio between the auxiliary unit speed *N_{AUX}* and the engine speed *N_{E}*, as a function of the engine speed.

In this example it is assumed that it is desired to run the auxiliary unit 1 at a constant speed independent of the engine speed. The arrangement shown in fig. 1 can be regarded as capable of operating in different modes. In a first operational mode the internal combustion engine is not running. Thereby, the planet carrier 43 is not moving and the auxiliary unit 1 is driven entirely by the first electrical machine 5, provided by electric power from the power storage device 9.

Referring to fig. 2, in a second operational mode, the engine speed is in an interval between idle speed *N_{idle}* and an ideal ratio speed *N_{IR} ,* described below. In the second operational mode, as the engine speed increases, the electrical power consumption of the first electrical machine 5, and accordingly the mechanical power input of the first electrical machine 5 to the auxiliary unit 1, decreases. This means that the gear ratio *N_{AUX}*/*N_{E}* (curve II in fig. 2) decreases as the engine speed *N_{E}* increases. Thereby, depending on the operational requirements of the engine, the second electrical machine 6 can be operated as a generator or as a motor. In the former case the second electrical machine 6 provides electrical power, which can be used to drive the first electrical machine 5. In the latter case the second electrical machine 6 can give torque assistance to the engine.

In a third operational mode, at the ideal ratio speed *N_{IR}* of the engine, no electrical power is provided to or obtained from the first electrical machine 5, which means that it is not moving, so that the annulus wheel is still.

In a fourth operational mode, the engine speed is above the ideal ratio speed *N_{IR} ,* and the first electrical machine 5 is operated as a generator, providing electrical power and applying a torque to the planetary gear set 4. As the engine speed increases, the electrical power distribution from the first electrical machine 5 increases, and accordingly the torque applied by the first electrical machine 5 to the planetary gear set 4 increases. This results in the gear ratio *N_{AUX}*/*N_{E}* (curve II in fig. 2) decreasing as the engine speed *N_{E}* increases. In general, the auxiliary unit speed can thereby be maintained or even decreased during a high or increasing engine speed. As in the second mode, depending on the operational requirements of the engine, the second electrical machine 6 can be operated as a generator or as a motor.

Accordingly, it is possible to achieve a desired speed, in this example a constant speed, of the auxiliary device 1, throughout a very wide speed range of the engine.

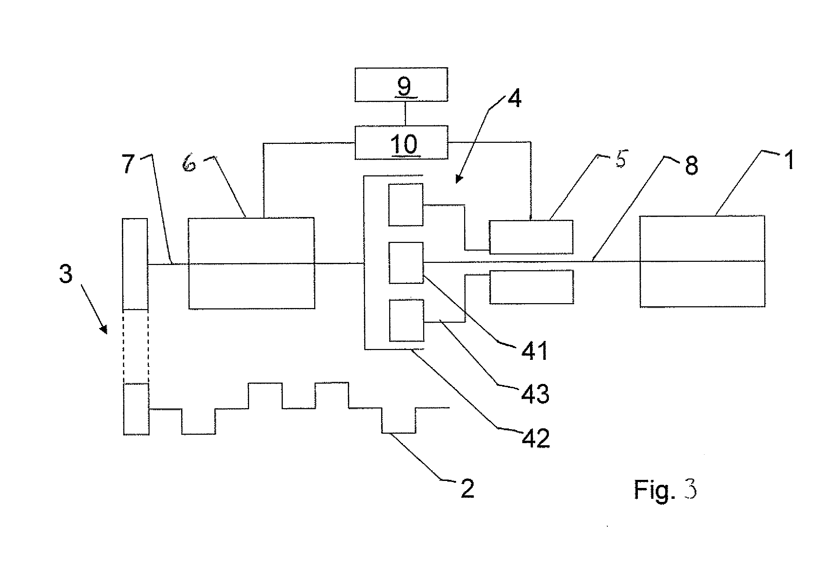

Fig. 3 shows another embodiment of the arrangement according to the invention. The embodiment has features in common with the one shown in fig. 1, except for the following: Here, the first electrical machine 5 is connected to the planet carrier 43 and the crankshaft 2 as well as the second electrical machine 6 are connected to the annulus wheel 42. Compared to the embodiment in fig. 1, this provides for an alternative relationship strategy between the first and second electrical machines 5, 6.

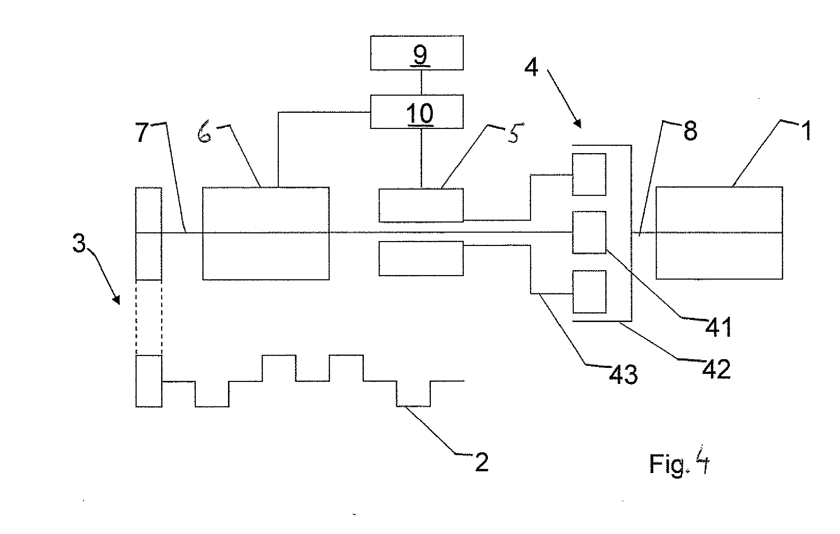

Fig. 4 shows another embodiment of the arrangement according to the invention. The embodiment has features in common with the one shown in fig. 1, except for the following: Here, the first electrical machine 5 is connected to the planet carrier 43, the crankshaft 2 as well as the second electrical machine 6 are connected to the sun wheel 41, and the auxiliary unit 1 is connected to the annulus wheel 42. Compared to the embodiments in fig. 1 and fig. 3, this provides for a further alternative relationship strategy between the first and second electrical machines 5, 6. In addition, the speed range of the auxiliary unit 1 is moved downwards, i.e. the interval for the gear ratio *N_{AUX}*/*N_{E}* (fig. 2) is moved downwards. Thus, this arrangement is specially suited for auxiliary units adapted for relatively low speeds. The embodiment in fig. 4 is specially suited for a case in which the auxiliary unit 1 is a compressor for an air conditioning system in a vehicle in which the engine is operable.

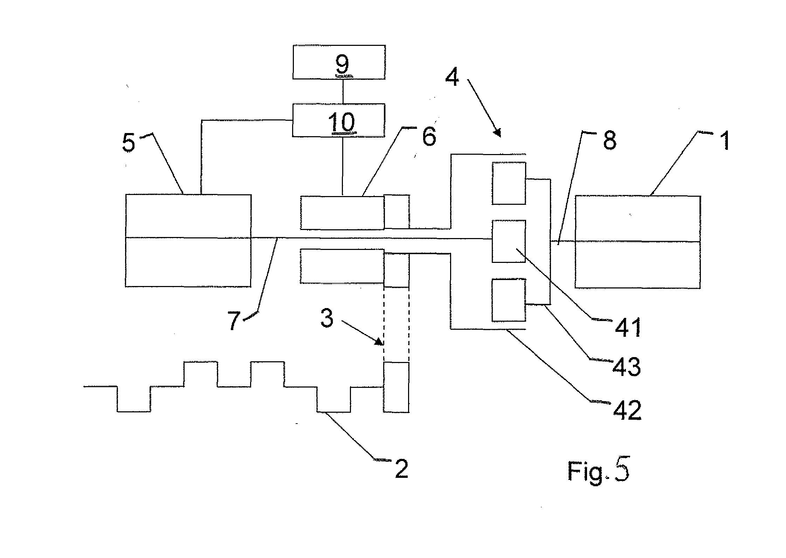

Fig. 5 shows an embodiment similar to the one shown in fig. 3, but differing therefrom in that the auxiliary unit 1 is connected to the planet carrier 43 and the first electrical machine 5 is connected to the sun wheel 41. An advantage with this embodiment is that the arrangement can be made more space efficient; more specifically, the extension of the arrangement parallel to the crankshaft 2 can be relatively short.

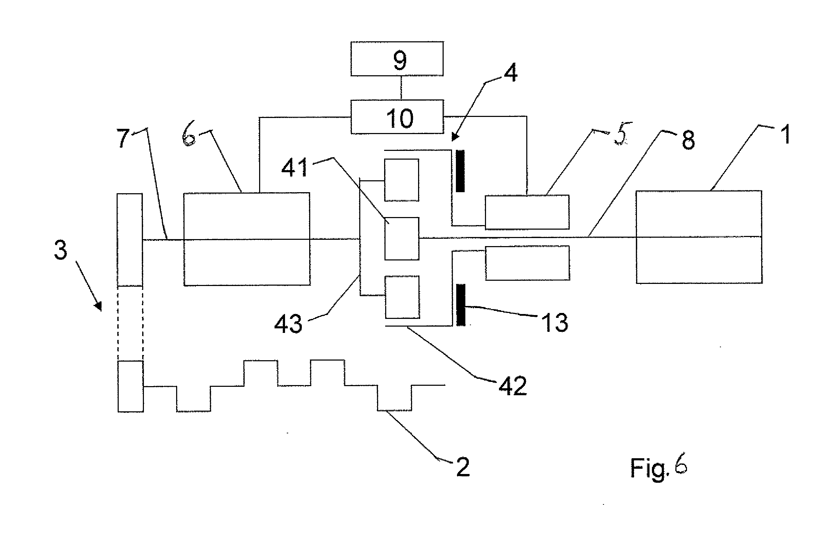

Fig. 6 shows an embodiment of the invention, which is similar to the one shown in fig. 1. Differing from the embodiment in fig. 1, locking means 13, in form of a clutch 13 is provided at the annulus wheel 42. The clutch is operable to lock the annulus wheel 42, and therefore the first electrical machine 5, to a non moving position. The clutch 13 has the following advantage: An electrical machine, when operating as a motor, has a low efficiency at low speeds. Therefore, the first electrical machine 5 can be locked by means of the clutch, instead of running it as a motor at low speed. This is preferably done in a speed range of the engine between the ideal ratio speed *N_{IR}* a suitable speed below the ideal ratio speed *N_{IR}*, (see fig. 2).

Thereby, running the first electrical machine 5 with a low efficiency is avoided, and this increases the total efficiency of the arrangement.

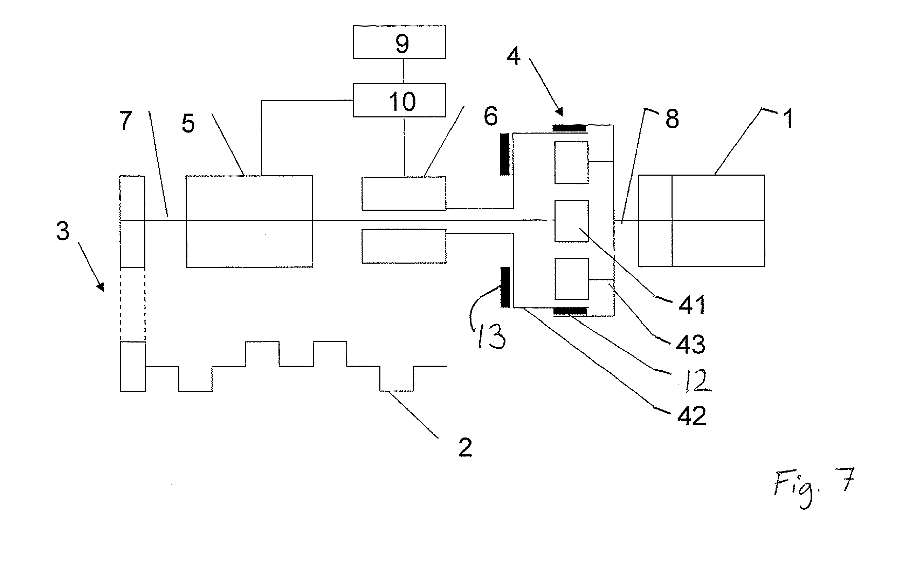

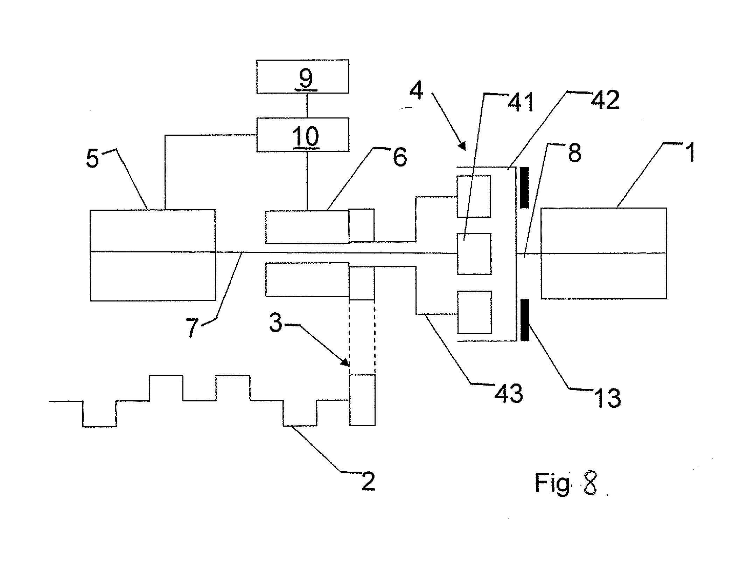

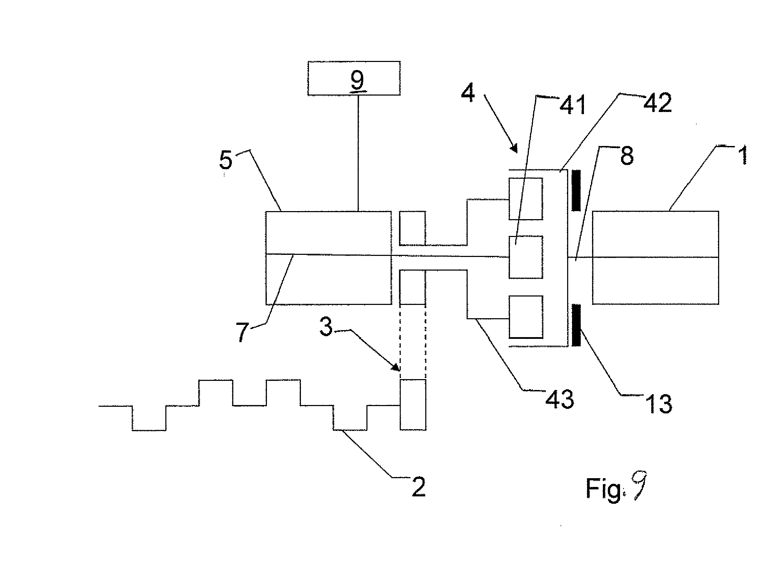

Fig. 7 shows another embodiment of the arrangement according to the invention. The embodiment has features in common with the one shown in fig. 1, except for the following: Here, the crankshaft 2 as well as the second electrical machine 6 are connected to the sun wheel 41, and the auxiliary unit 1 is connected to the planet carrier 43. The result is that the speed range of the auxiliary unit 1 is moved downwards, i.e. the interval for the gear ratio *N_{AUX}*/*N_{E}* (fig. 2) is moved downwards. More specifically, the interval for the gear ratio *N_{AUX}*/*N_{E}* is moved even further downwards compared to the embodiment shown in Fig. 4. Thus, this arrangement is specially suited for auxiliary units adapted for very low speeds.

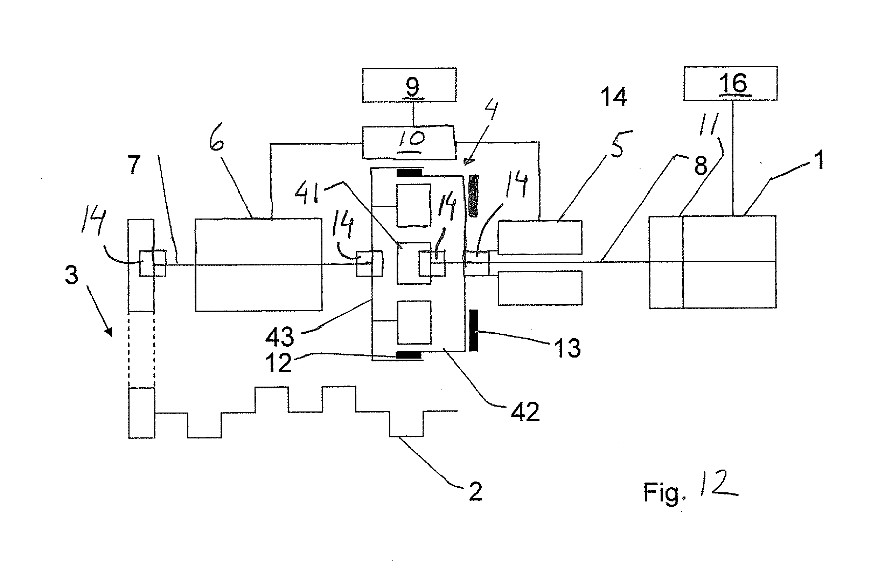

The embodiment in fig. 7 comprises, similarly to the embodiment in Fig. 6, locking means 13, in form of a clutch 13 provided at the annulus wheel 42. The clutch is operable to lock the annulus wheel 42, and therefore the first electrical machine 5, to a non moving position. This provides for the same advantage as in the case of the embodiment in fig. 6. Further locking means 12 are operable to lock the annulus wheel 42 to the planet carrier 43. Locking the annulus wheel 42 to the planet carrier 43 will result in both electrical machines 5, 6 and the auxiliary unit 1 rotating at the same speed, which is advantageous as described below with reference to fig. 11.

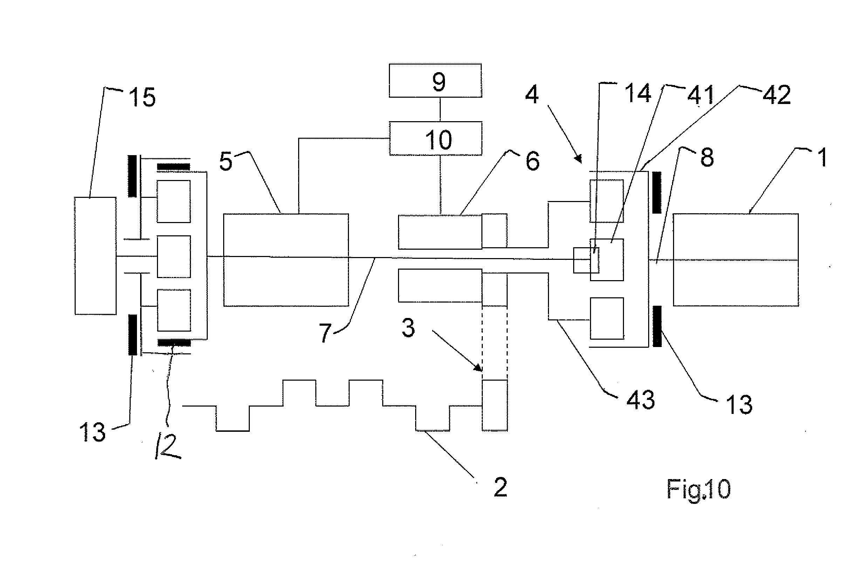

Fig. 8 shows an embodiment in which the auxiliary unit 1 is connected to the annulus wheel 42, the first electrical machine 5 is connected to the sun wheel 41 and the crankshaft 2 as well as the second electrical machine 6 are connected to the planet carrier 43. Additionally, the arrangement comprises locking means 13 in the form of a coupling 13, which is operable to arrest the annulus wheel 42, and thereby put the auxiliary unit 1 in a non-moving position.

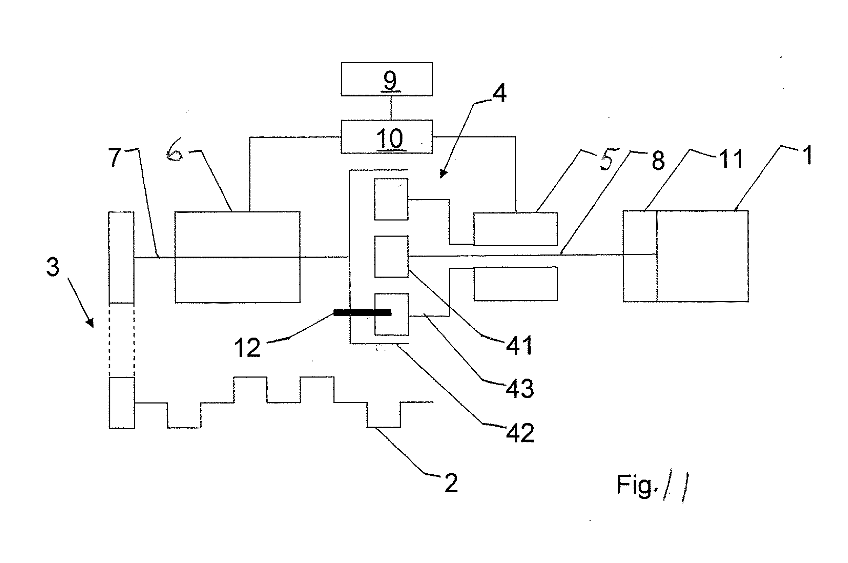

Fig. 9 shows an embodiment corresponding to the one shown in fig. 8, but differing in that there is no second electrical machine 6 connected to the crankshaft 2. In general, any of the embodiments within the scope of the invention could be provided without the second electrical machine 6 connected to the crankshaft 2.

Fig. 10 shows a further embodiment, having all features of the embodiment in fig. 8, but with an additional planetary gear set 4A, the annulus wheel of which is connected to the first electrical machine 5, and the sun gear of the additional planetary gear set 4A being connected to an additional auxiliary unit 15. Locking means 13 in form of a coupling 13 is operable to arrest the planet carrier of the additional planet gear set 4A, so as to allow mechanical power to be transmitted to the additional auxiliary unit 15. In addition, locking means 12 are operable in the additional planet gear set 4A to lock the annulus wheel to the planet carrier, so that the additional auxiliary unit 15 rotates at the same speed as the first electrical machine 5.

The first electrical machine 5 is also connected to the other planetary gear set 4 corresponding to the one shown in fig. 8. By means of a free-wheel 14 at the sun wheel 41 the first electrical machine 5 can be used as a motor running at a greater speed than the planet gear 4 allows, so that the additional auxiliary unit 15 can be run at a greater speed. It should be noted that such a free-wheel can be provided in connection to any internal arrangement between the planetary gear set 4, the first electrical machine 5, the crankshaft 2 and the auxiliary unit 1.

Fig. 11 shows an embodiment, similar to the one shown in Fig. 3. In addition, locking means 12 are operable to lock the annulus wheel 42 to the planet carrier 43. Locking the annulus wheel 42 to the planet carrier 43 will result in both electrical machines 5, 6 and the auxiliary unit 1 rotating at the same speed. This is advantageous when the first shaft 7 is rotating at a speed that is suitable for the auxiliary unit 1, since by fixing the first shaft 7 to the auxiliary unit 1, losses in the transfer of electricity between the electrical machines 5, 6 and the power storage device 9, can be eliminated.

Further locking means 11 in the form of a clutch 11 are operable to disconnect the auxiliary unit 1 from the planet gear set 4. This is beneficial in a case where the auxiliary unit 1 is a compressor for an air conditioning system, since the locking means can be used to control the cooling capacity of the AC system.

In a vehicle, whether or not the locking means 11 for disconnecting the auxiliary unit 1 are provided, the locking means 12 for locking the annulus wheel 42 to the planet carrier 43 can be used to connect the electrical machines 5, 6. Thus, the electrical machines 5, 6 will be connected, which makes it possible to obtain effect from both machines 5, 6 when regenerating brake forces of the vehicle, or obtaining a large torque assist to the engine.

In the following paragraph reference is made to fig. 12. In general, any of the locking means 11, 12, and 13 described above can be provided in connection to any internal arrangement between the planetary gear set 4, the first electrical machine 5, the crankshaft 2 and the auxiliary unit 1. Also, a variety of different manners for their incorporation with the inventive arrangement is possible. Fig. 12 shows possible arrangements for locking means 11, 12, 13 and free-wheels 14. The locking means 11, 12, 13 can be of friction type or of some suitable mechanical locking type. Here the locking means 12 operable to fix the annulus wheel 42 to the planet carrier 43 is shown as a clutch between the two planet gear set parts 42, 43.

Referring to fig. 12, a number of locations for a free-wheel 14, allowing different rotational speed in only one direction, are possible. For example, a free-wheel 14 can be located between the second electrical machine 6 and the transmission 3, which is located between the crankshaft 2 and the second electrical machine 6. Thereby, the second electrical machine 6 can be used as a motor running at a greater speed than the engine allows, in order to increase the speed of the auxiliary unit 1. Alternatively, a free-wheel 14 can be located between the second electrical machine 6 and the planet gear set 4. Thereby, the second electrical machine 6 can be used as a motor or a generator running at a greater speed than the planet gear set 4 allows. As a further alternative, a free-wheel 14 can be located between the planet gear set 4 and the first electrical machine 5. Thereby, the planet gear set 4 can be allowed to run at a greater speed than the first electrical machine 5 permits. As another alternative, a free-wheel 14 can be located between the planet gear set 4 and the auxiliary unit 1. Thereby, the planet gear set 4 can be allowed to run independently of the auxiliary unit 1 in one rotational direction.

In general, the independent operation of the auxiliary unit, provided by the invention, is very advantageous in cases where the auxiliary unit itself drives a device or a system which has operational parameters with requirements that are independent of the engine speed. Fig. 12 depicts the auxiliary unit 1 as connected to an energy storage unit 16 adapted to store heat (e.g. for vehicle compartment heating while the engine is turned off) in the form of melted salt. Alternatively, the energy storage unit 16 could be adapted to store coldness (e.g. for vehicle compartment cooling while the engine is turned off) by forming ice from water. In cases where the auxiliary unit 1 is a compressor or a hydraulic pump, the energy storage unit 16 could be a pressure accumulator.

Advantageously, the auxiliary unit described in the embodiments above is an intake air compressor in an HCCI engine. Thereby, it is possible to remain in the HCCI mode when the torque of the engine increases. The reason is that a high torque under HCCI mode requires a high pressure difference over the compressor. The maximum pressure difference of the compressor sets the limit for the HCCI mode. The possibility of the invention of running the auxiliary unit, in form of the compressor, largely independently of the engine speed, and to obtain a high gear ratio *N_{AUX}*/*N_{E}* (see fig. 2), has the following result: It makes it possible to reach the maximum pressure difference of the compressor in a larger number of operational situations, compared to a known compressor drive arrangements in HCCI engines, and therefore it is possible to remain in the HCCI mode in a larger number of operational situations. More specifically, the arrangement according to the invention can be used to obtain a very high gear ratio at any engine speed. Very high gear ratios can be obtained by the embodiment shown in Fig. 3, described above.

In the embodiments above, each of the auxiliary unit 1, the first electrical machine 5 and the second electrical machine 6 has been described as being connected directly, or non-rotatably, to the sun wheel 41, the annulus wheel 42 or the planet carrier 43. However, alternatively, any of the auxiliary unit 1, the first electrical machine 5 and the second electrical machine 6 can be connected indirectly, e.g. via a transmission such as a belt or chain transmission, to the sun wheel 41, the annulus wheel 42 or the planet carrier 43.

## Claims

1. An arrangement at an internal combustion engine, comprising an auxiliary unit (1) and a transmission, the auxiliary unit (1) being adapted to be driven by a crankshaft (2) of the engine via the transmission, **characterized in that** it comprises a first electrical machine (5), **in that** the transmission comprises a planetary gear set (4), comprising three gear parts (41, 42, 43) in the form of a sun wheel (41), an annulus wheel (42), and a planet carrier (43), and **in that** the three gear parts (41, 42, 43) are connected respectively to the auxiliary unit (1), the first electrical machine (5) and the crankshaft (2).

2. An arrangement according to claim 1, wherein the auxiliary unit (1) is a compressor for an air conditioning system.

3. An arrangement according to claim 1, wherein the auxiliary unit (1) is a supercharger in a homogenous charge compression ignition (HCCI) engine.

4. An arrangement according to any of the preceding claims, wherein a second electrical machine (6) is connected to the same of the three gear parts (41, 42, 43) as the crankshaft (2).

5. An arrangement according to any of the preceding claims, wherein the auxiliary unit (1) is connected to the sun wheel (41), the first electrical machine (5) is connected to the annulus wheel (42) and the crankshaft (2) is connected to the planet carrier (43).

6. An arrangement according to any of the claims 1-4, wherein the auxiliary unit (1) is connected to the sun wheel (41), the first electrical machine (5) is connected to the planet carrier (43) and the crankshaft (2) is connected to the annulus wheel (42).

7. An arrangement according to any of the claims 1-4, wherein the auxiliary unit (1) is connected to the annulus wheel (42), the first electrical machine (5) is connected to the planet carrier (43) and the crankshaft (2) is connected to the sun wheel (41).

8. An arrangement according to any of the claims 1-4, wherein the auxiliary unit (1) is connected to the planet carrier (43), the first electrical machine (5) is connected to the sun wheel (41) and the crankshaft (2) is connected to the annulus wheel (42).

9. An arrangement according to any of the claims 1-4, wherein the auxiliary unit (1) is connected to the planet carrier (43), the first electrical machine (5) is connected to the annulus wheel (42) and the crankshaft (2) is connected to the sun wheel (41).

10. An arrangement according to any of the claims 1-4, wherein the auxiliary unit (1) is connected to the annulus wheel (42), the first electrical machine (5) is connected to the sun wheel (41) and the crankshaft (2) is connected to the planet carrier (43).

11. An arrangement according to any of the preceding claims, wherein locking means (13) are operable to lock the first electrical machine in a non-moving position.

12. An arrangement according to any of the preceding claims, wherein locking means (13) are operable to lock the auxiliary unit (1) in a non-moving position.

13. An arrangement according to any of the preceding claims, wherein the first electrical machine (5) is drivingly connected to an additional auxiliary unit (15), and a free-wheel (14) is arranged between the first electrical machine (5) and the planetary gear set (4).

14. An arrangement according to any of the preceding claims, wherein locking means (12) are operable to lock the annular wheel (42) to the plane carrier (43).
